Europäisches Patentamt

European Patent Office

Office européen des brevets

(19)

(11) Publication number: **0 073 416**
**A2**

# EUROPEAN PATENT APPLICATION

(12)

(21) Application number: 82107528.0

(51) Int. Cl.³: **B 29 C 25/00**

(22) Date of filing: 18.08.82

(30) Priority: 26.08.81 US 296545

(43) Date of publication of application: 09.03.83
Bulletin 83/10

(84) Designated Contracting States: AT BE CH DE FR GB IT
LI LU NL SE

(71) Applicant: MARYLAND CUP CORPORATION,
10100 Reisterstown Road, Owings Mills
Maryland 21117 (US)

(72) Inventor: Harrison, Roy Raymond, 758 "G" Street,
Pasadena Maryland 21122 (US)
Inventor: Gliden, Morton, 3 Swanhill Drive, Baltimore
Maryland 21208 (US)

(74) Representative: Schmidt, Horst, Dr. et al, Patentanwälte
Pohlmann & Schmidt Siegfriedstrasse 8,
D-8000 München 40 (DE)

(54) Methods and means for forming containers from heat shrinkable oriented foam plastic sheet material.

(57) A thermo-shrinkable sheet material is punched (at 34) into arcuate container side blanks having information pre-printed thereon. Simultaneous to the punching of the arcuate blank, a bottom blank is presented (at 81) to a forming cone or mandrel (90). The side blanks are then transferred to a folding station (83) where they are individually folded about the forming cone or mandrel and where the seam is ultrasonically welded. The thermoshrink material is then heated (at 84) to shrink the frustoconical container side about the end of the forming cone or mandrel. Vacuum draws the thermo-shrink material into recesses formed in the forming cone or mandrel. The bottom side seams (at 87) are then seamed and the side seam is ironed to make the thickness of the side walls substantially uniform throughout the container circumference. The circumferential container lip is then curled (at 222) to form a finished container which is ejected for packaging. The apparatus of the present invention allows the use of existing paper cup manufacturing machinery to make a two piece thermo-plastic container. Further, the use of arcuate side blanks results in a container having a sidewall of substantially uniform thickness.

## Methods and means for forming containers from heat shrinkable oriented foam plastic sheet material

This invention relates to methods and means for forming containers and more particularly, to methods and means for forming containers from heat shrinkable material such as foamed plastic sheets and the like.

It is known in the art to shrink form containers such as drinking cups from pre-formed tubular blanks of circumferentially oriented thermoplastic material such as foamed polystyrene.

U.S. Patent 4,121,402 to Cress et al discloses a method and apparatus for manufacturing foamed containers from cylindrical blanks formed of rectangular pre-printed blanks. However, the method used in the above-mentioned Cress et al Patent requires the use of machinery designed specifically for the manufacture of plastic containers. Consequently, there is a need in the art for a foam cup making machine which can be made by modifying an existing paper cup-making machine.

It is, therefore, an object of the present invention to provide a new and novel method and apparatus for manufacturing two-piece containers from heat shrinkable material such as foamed plastic sheets and the like through a modification of an existing paper container manufacturing apparatus.

Another object of the present invention is to produce two-piece containers from arcuately configured blanks, thus allowing simple formation of each blank into a frusto-conical shape before heat shrinkage is utilized to form the finished cup.

It is another object of the present invention to produce a machine less complex than a conventional paper cup making machine by removal of the gluing system and bond forming stations necessary for the construction of such paper containers.

It is still another object of the present invention to seal the container side seam in a faster and more positive manner through the use of ultrasonic sealing.

It is a further object of the present invention to eliminate the added cross-sectional thickness of the side seam overlap normally associated with the formation of two-piece containers of heat shrinkable material in order to promote better and more uniform seating of the container in a top curling pot.

It is still a further object of the present invention to utilize arcuate blanks in a two-piece heat shrinkable container manufacturing process in order to derive a more uniform material distribution within the cup container side wall and in order to produce a stiffer container.

These and other objects of the present invention will become more fully apparent with reference to the following specification and drawings which relate to the preferred embodiments of the present invention.

## Summary of the Invention

A convolute roll of elongated pre-printed stock of biaxially oriented heat shrinkable material such as polystyrene form sheet is unwound and fed to a side blanking die which severs the feed stock into arcutate blanks of substantially identical dimensions. The arcuate blanks are fed by a blank transfer turret to a blank holding station located about the periphery of an indexing forming turret. A bottom blank is formed at a bottom blanking station and is applied to the bottom of one of the rotatable vacuum forming cones or mandrels equi-spaced about the periphery of the indexing forming turret. The indexing forming turret is then indexed to present this rotatable vacuum forming cone or turret to a pre-heating station wherein the bottom blank is pre-softened. The turret is then indexed to present the vacuum forming cone or mandrel and its associated bottom blank to a side blank folding station wherein the arcuate side blank is folded about the vacuum forming cone or mandrel by a set of side blank folding clamps. Simultaneously, an ultrasonic transducer applies ultrasonic energy to the seam to thereby fuse the respective edges of the arcuate side blank together to form a frusto-conical side wall. The indexing forming turret then presents the vacuum forming cone and its associated side wall blank and bottom blank to several heat shrinking stations where the heat shrinkable material shrinks around the vacuum forming cone. Simultaneously, a vacuum is applied to details on the vacuum forming cone or mandrels to conform the heat shrinkable material to the required container shape. The indexing forming turret then advances the vacuum forming cone and completed container to a bottom and side forming station wherein the seam between the sidewalls and bottom of the container is sealed and the sidewall seam is ironed to render the cup uniform in cross-sectional thickness. The indexing forming turret then advances to a container blowoff station where compressed air is applied to the vacuum forming cone or mandrel thus transferring the container to a top curling station where a top edge curl is formed on the container. The finished container is then ejected and transferred to a packaging station.

Brief Description of the Drawings

Figure 1 is a top plan view of the container forming machine of the present invention;

Figure 1a is a sectional side elevation of the machine in Figure 1 illustrating the relative locations of the rotatable forming cones and infrared shrink heat assemblies;

Figure 1b is a sectional side elevation of the blank folding station illustrating the placement of the ultrasonic transducer and seaming sealing horn;

Figure 2 is a side sectional view of side foam roll stock feed assembly and side blanking die of Figure 1;

Figure 3 is a side elevation of the indexing forming turret illustrating a majority of the forming stations of Figure 1 and particularly illustrating the operation of the side blank folding clamps in the clamped position;

Figure 4 is a side elevation of the indexing forming turret taken from the same perspective as that of Figure 3 and illustrating the side blank folding clamps in the open position;

Figure 5 is a schematic side view of the indexing forming turret showing details of the rotating mechanisms for the vacuum forming cones as well as the arrangement of the preheat and shrinking stations;

Figure 6 is a schematic, partially sectioned, side view of the indexing forming turret illustrating details of the rotating vacuum forming cone and the bottom and side wall ironing and sealing tool;

Figure 7 illustrates a top view of the curling turret of the present invention; and

Figure 8 is a sectional side view of the curling turret of Figure 7 illustrating its interaction with the cam driven curling tools and the ejection of the finished container towards the necessary packaging station.

Detailed Description of the Drawings

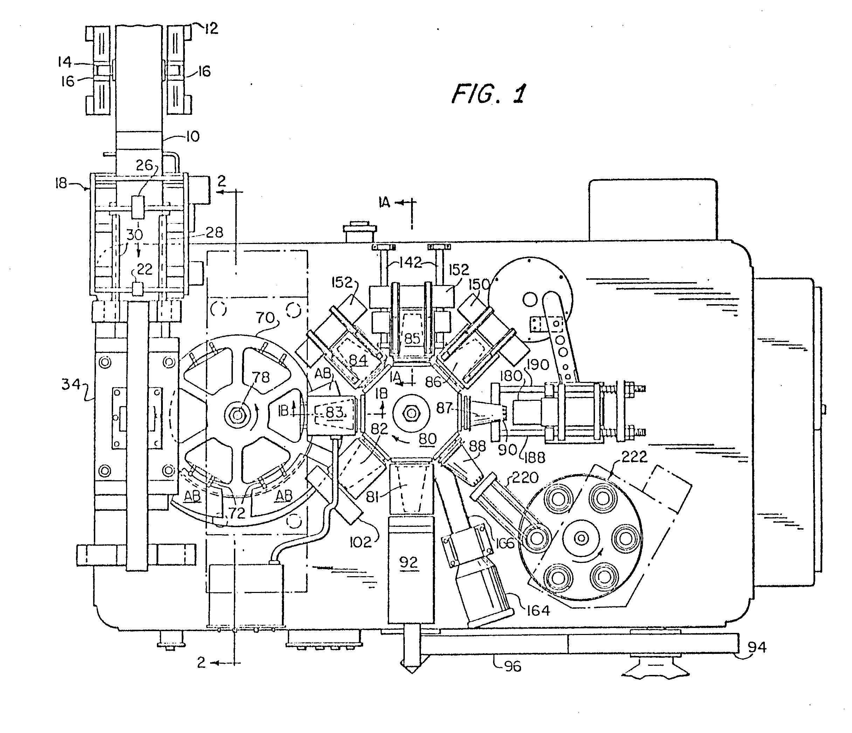

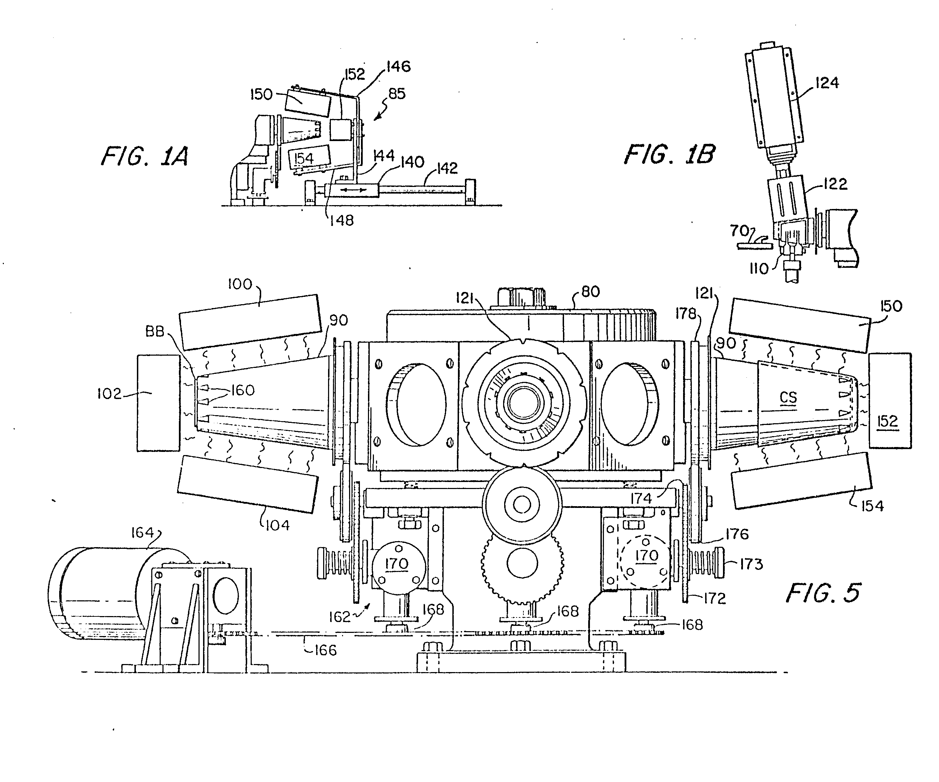

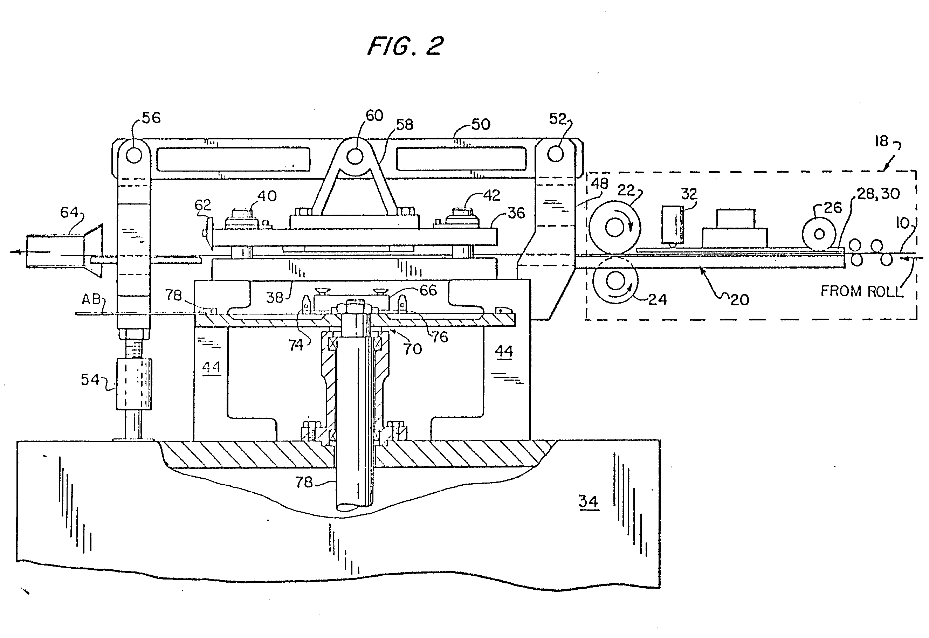

Referring to Figures 1 and 2, a material 10 from which the frusto-conical side wall and ultimate containers are to be made is shown as an elongated strip convolutely wound in the form of a large supply roll 12 mounted on a roll support shaft 14 rotatably mounted in a pair of suitable bearings 16.

The feed material 10 is unwound from the supply roll 12 by a side material feed assembly 18. This side material feed assembly 18 includes a feed table 20 for supporting the feed material 10. A pair of feed rollers 22, 24 strip the feed material 10 off the supply roll 12 and feed the material 10 to a side blanking die assembly 34 at a desired feed rate. Additionally, the side material feed assembly 18 includes a guide roller 26 which guides the feed material 10 on the feed table 20. First and second feed material guides 28, 30 direct the feed material 10 along the feed table 20. A print registration sensor 32 is provided in the side material feed assembly 18. This print registration sensor 32 synchronizes the side blanking die assembly 34 to the spacing of printed indicia (not shown) disposed upon the surface of the feed material 10.

The side blanking die assembly 34 includes a side blanking punch 36 and an associated blanking die 38. Figure 2 illustrates the side blanking punch 36 in the open position. The side blanking punch 36 and its associated die 38 may be formed of any desired construction. The side blanking punch 36 is slideably mounted on punch guide pins 40, 42. The associated blanking die 38 is mounted to a die support mount 44. A side blanking punch fulcrum 48 is fixably mounted on the die support mount 44. A die actuating arm 50 is pivotally mounted on the side blanking punch fulcrum 48 on fulcrum pin 52. The die actuating arm 50 is reciprocated by an adjustable blanking punch pushrod 54. The blanking punch pushrod 54 is pivotally mounted on the die actuating arm 50 through a pushrod pivot pin 56. The blanking punch 36 has a blanking punch bracket 58 attached thereto. The blanking punch bracket 58 is pivotally mounted to the die actuating arm 50 by a blanking punch drive pin 60.

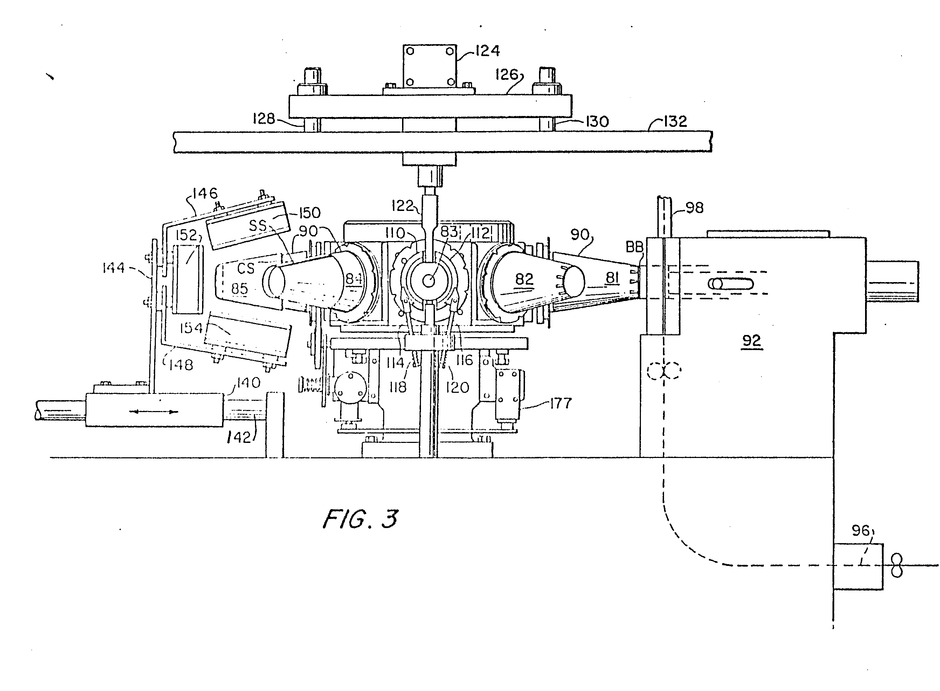

The blanking punch pushrod 54 reciprocates in synchronism with the remainder of the cup making appartus. With every reciprocation of the blanking punch pushrod 54, the side blanking punch 36 is driven against the associated blanking die 38 to punch an arcuate blank AB from the feed material 10. Simultaneously, a scrap cutter 62 severs scrap from the remainder of the feed material 10. A vacuum scrap removal channel 64 then removes the scrap from the side blanking die 34 for recycling. The completed arcuate side blank AB is removed from the side blanking die 34 by a vacuum actuated blank picker 66. This blank picker 66 transfers the finished arcuate side blank AB to a blank transfer turret 70 which is indexed to the rest of the apparatus and includes a number of arcuate blank support stations 72. Each of the arcuate blank support stations includes first and second blank support fingers 74, 76. These first and second blank support fingers 74, 76 are selectably closed to grasp the arcuate side blank AB for transfer to the rest of the machine. Reference numeral 79 illustrates one of these blank support fingers in the closed position, supporting an arcuate side blank AB. The blank transfer turret 70 rotates around a blank transfer turret shaft 78 and transfers the arcuate side blank AB to a folding station 83 located around the periphery of an indexing forming turret 80. The indexing forming turret 80 intermittently rotates to index a plurality of rotatable forming cones or mandrels 90 to the respective stations located around the periphery of the indexing forming turret 80. As shown in Figure 3, each forming cone or mandrel 90 is frusto-conical in shape and includes a bottom blank receiving surface 91 and a plurality of notches or recesses 160 provided on the frusto-conical surface of each forming cone or mandrel 90 adjacent said bottom blank receiving

surface 91.

In the preferred embodiment, eight work stations are located about the periphery of the indexing forming turret 80. A bottom blanking station 81 is the first station located about the periphery of the indexing forming turret 80. Referring to Figure 3, in combination with Figure 1, a bottom blanking die assembly 92 is located at the bottom blanking station 81. A bottom stock material roll 94 feeds bottom stock material 96 to the bottom blanking die 92. The bottom blanking die assembly punches bottom blanks BB from the bottom blank material. The remaining selvage material 98 exits the bottom blanking die assembly. Each individual bottom blank BB is transferred to one of a plurality of forming cones or mandrels 90 when each mandrel is indexed at the bottom blanking station 81.

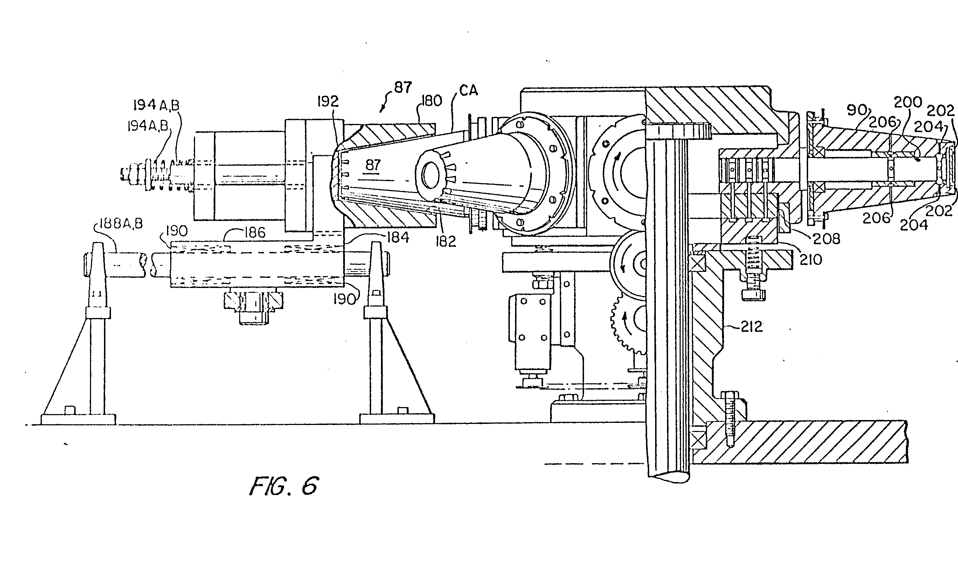

The indexing forming turret 80 is then indexed to rotate a new forming cone or mandrel 90 to the bottom blanking station 81 while indexing the previous forming cone or mandrel 90 with the bottom blank BB attached to a botton pre-heating and softening station 82 which is also located around the periphery of the indexing forming turret 80. The bottom blanks BB are held to their respective forming cones or mandrels 90 through the use of a vacuum applied as will be later described with reference to Figure 6. At the bottom pre-heating and softening station 82, the forming cone or mandrel 90 supporting the bottom blank BB is continuously rotated as will be later described with regard to Figure 5. Figure 5 also illustrates the position of an upper side pre-heater 100, a bottom pre-heater 102 and a lower side pre-heater 104. These upper side, bottom, and lower side pre-heaters 100, 102, 104 are arranged about the forming cone or mandrel 90 and pre-heat the forming cone or mandrel while simultaneously heating and softening the bottom blank BB held on the end of the forming cone or mandrel 90. In the preferred embodiment, the pre-heaters are infrared heaters.

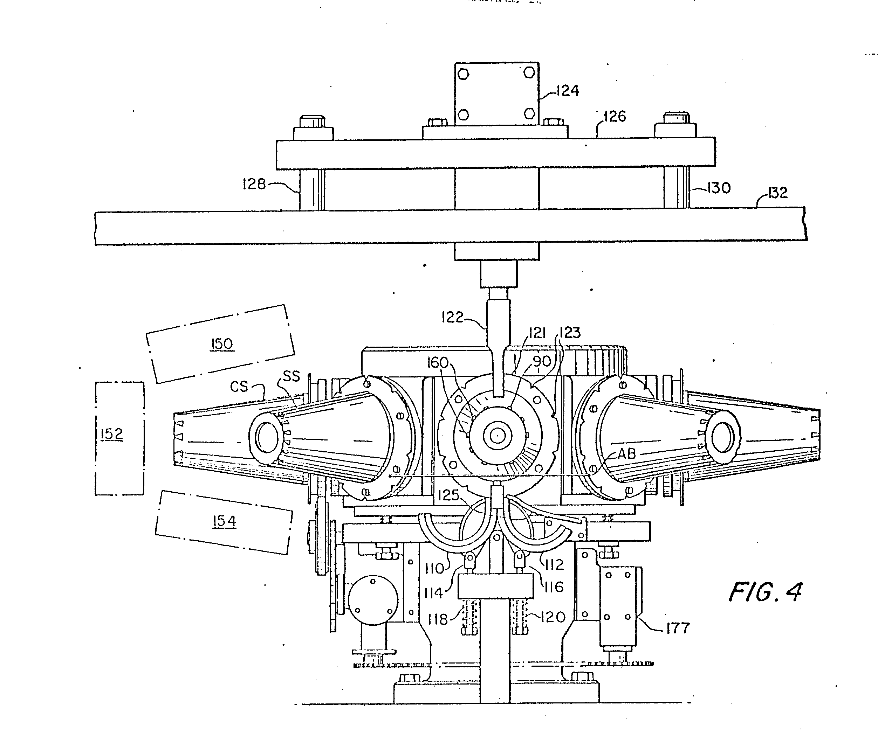

The forming cone or mandrel 90 supporting the bottom blank BB is then indexed to a folding station 83 where the arcuate side blank AB is provided by the blank transfer turret 70. Figure 4 illustrates the folding station waiting to accept an arcuate blank AB from the blank transfer turret 70 while Figure 3 illustrates the folding station 83 after the folding operation has been completed and awaiting a seaming operation. Referring to Figures 3 and 4, a cup side blank AB is illustrated in Figure 4 in the position in which it is held by the first and second blanks support fingers 74, 76 (not shown in this Figure). When the arcuate blank AB is positioned as shown in Figure 4, the first and second side blank folding clamps 110, 112 are folded around the forming cone or mandrel 90 and thus fold the arcuate blank AB disposed therebetween about the forming cone or mandrel 90. The first and second side blank folding clamps 110, 112 are actuated by push rods 114, 116 during a timed rest period within a main indexing mechanism constructed to control the timing at the various stations of the device of the present invention in synchronism with the indexing of the blank transfer turret 70. The first and second side blank folding clamps 110, 112 are biased in the open position by first and second clamp springs 118, 120. The first and second blank folding clamps are cam driven in synchronism with the indexing mechanism.

The forming cones or mandrels are normally rotated at the folding station 83 by a forming cone or mandrel rotation drive 162 as will be later described. However, at the folding station, this forming cone or mandrel rotation drive includes a slip clutch 173. An index plate 121 is mounted to each forming cone or mandrel for rotation therewith and has a plurality of detents 123 arranged about its periphery. A pawl 125 is provided for positive engagement with any of the detents 123 of the index plate 121. It is undesirable to form a side seam SS between the edges of the arcuate cup side blank AB over one of the notches or recesses 160 on the forming cone or mandrel 90 and thus the positive engagement between the pawl 125 and one of the detents 123 terminates the rotation of the forming cone or mandrel 90 at a point where the side seam SS will be formed between adjacent notches or recesses 160. The rotation of the mandrel rotation drive is thus absorbed by slip clutch 173.

After the first and second side blank folding clamps 110, 112 fold the arcuate cup side blank AB about the forming cone or mandrel 90, an ultrasonic tool or horn 122 is lowered into contact with the seam formed by the contact of the arcuate blank edges. The ultrasonic tool applies ultrasonic energy to the arcuate blank edges to fuse the edges and form a side seam SS. The ultrasonic tool or horn is connected to an ultrasonic transducer 124. Figure 1B illustrates a section of Figure 1 taken along lines 1B. This view shows the relative placement of the ultrasonic transducer 124 and ultrasonic tool or horn 122 relative to the first and second side blank folding clamps 110, 112 and the blank transfer turret 70. The ultrasonic transducer is mounted to a cam driven mounting bracket 126 slidably mounted to transducer guide pins 128, 130 which are in turn mounted to a portion of the machine frame 132. A cam (not shown) raises and lowers the ultrasonic transducer 124 by sliding the cam-driven mounting bracket 126 along the transducer guide pins 128, 130. Thus, in response to the cam, the ultrasonic transducer 124 and its respective ultrasonic tool or horn 122 are raised out of and lowered into contact with a side seam SS formed by the contact between the ends of the arcuate blank AB wrapped about the forming cone or mandrel 90. The ultrasonic horn 122 and its respective transducer 124 are moved in synchronism with the movement of the remainder of the folding station. After the first and second side blank folding clamps 110, 112 fold the arcuate blank AB about the forming cone or mandrel 90, the ultrasonic transducer 124 and its associated ultrasonic tool or horn 122 are lowered into contact with the seam produced by the contact of the edges of the arcuate blank. The ultrasonic transducer 124 is energized and the ends of the arcuate blank AB are "welded" to form a side seam SS in the frusto-conical container side CS formed from the arcuate side blank AB. Thus, the folding operation is completed and the indexing forming turret 80 is incremented to rotate the forming cone or mandrel 90 with its associated frusto-conical container side CS into registration with a new work station about the periphery of the indexing forming turret 80.

After the arcuate side blank AB is folded and the side seam SS is welded, the frusto-conical container sides CS are incremented to the first heat shrink station 84. Second and third heat shrink sections 85, 86 are also provided about the periphery of the indexing forming turret 80. Except for the relative locations of the first, second, and third heat shrink stations, the details of these stations are otherwise identical. Thus, only one station will be described. The forming cone or mandrel 90 is continually rotated at each of these three heat shrink stations 84, 85, 86. Thus, the frustoconical container side walls CS are uniformily heated. The second heat shrink station 85 as illustrated in Figure 3 is exemplary of the construction of each of these three heat shrink stations.

At this heat shrink station 85, a heater carriage 140 is provided to adjust the position of the shrink heaters with respect to the forming cone or mandrel 90. The heater carriage 140 is slidably remounted on a heater carriage support 142. The heater carriage 140 may be axially adjusted to vary the distance between the heating elements of the shrink heater station and the center of the indexing forming turret 80. Further, the heater carriage 140 associated with each of the three heat shrink stations may be retracted as a unit to remove the heat from those stations and for clearing jams. The heater carriage support may be suitably mounted to the frame of the apparatus of the present invention in any desired manner. An upright heater support 144 provided on the heater carriage 140 is used to position the respective heating elements about the forming cone or mandrel 90 and its frusto-conical container side CS and bottom blank BB. An upper heater support bracket 146 is used to support an upper shrink heater 150 which is spaced from the frusto-conical container side CS at a desired distance. A lower heater support bracket 148 is used to space a lower shrink heater 154 from the forming cone or mandrel 90 and its associated frusto-conical side CS at a distance approximately equal to the spacing of the upper shrink heater 150. A bottom shrink heater 152 is provided adjacent to the end of the forming cone or mandrel 90 and is attached to the upright heater support 144 at the points of attachment of the upper heater support bracket 146 and lower heater support bracket 148. The shrink heaters disposed in the first, second, and third heat shrinker stations 84, 85, 86

are, in the preferred embodiment, radiant or infrared heaters. The temperature used to shrink the frusto-conical container side CS around the forming mandrel may be varied by varying the voltage to respective shrink heaters or by varying the distance of the shrink heaters from the mandrel by the relative movement of the heater carriage 140 on the heater carriage support 142. As the forming cones or mandrels 90 are indexed from the first to the second to the third heat shrink stations, the frusto-conical container side is progressively heat shrunk about the end of the forming cone or mandrel 90 as shown in Figure 3. Simultaneously, vacuum is applied to vacuum passages within the forming cone or mandrel 90 to retract the softened frusto-conical container side CS into recesses 160 formed in the forming cones or mandrels 90. The details of the vacuum passages will be later described. Figure 1A illustrates the arrangement of the upper shrink heater 150, bottom shrink heater 152, and lower shrink heater 154 at the first, second or third heat shrink stations 84, 85, 86. Figure 1A is a section taken along lines 1A of Figure 1. However, the construction of the first and third heat shrink stations 84, 86 may be the same.

The construction of the forming cone or mandrel rotation drive (generally indicated as 162) will now be described in relation to Figure 5. A forming cone drive motor 164 continually drives a cone rotation drive chain 166. This cone rotation drive chain 166 interacts with a cone rotation driven sprocket 168 associated with each of the work stations arranged about the indexing forming turret 80. The cone rotation drive sprocket 168 associated with each of these work stations in turn drives a right angle gear drive 170 which drives a first motion transfer gear 172. At stations where slippage is required, a slip clutch 173 is provided between the right angle gear drive 170 and a first motion transfer gear 172. The slip clutch 173 is a spring-type clutch which has an adjustable tension. At stations where the rotation of the forming cone or mandrel 90 is not desired, the right angle drive 170 is replaced by an idler assembly 177 (as shown in Figs. 3, 4) which does not transfer the movement to the forming cone or mandrel 90. A slip clutch 173 is used at the folding station 83 as already described. Further, a slip clutch 173 may be used at a bottomside sealing and ironing station 87 (to be later described) if an additional heating station (not shown) is to be used therewith. While slip clutches 173 are not required at the heating stations 82, 84, 85, 86, Figure 5 illustrates this slip clutch construction. The first motion transfer gear 172 transfers the movement supplied by the right angle gear drive 170 to a second motion transfer gear 174 and thus to a friction drive wheel 176. The friction drive wheel 176 then transfers this movement into rotation of the forming cone or mandrel 90 by driving a friction collar 178 axially aligned and fixably mounted to each forming cone or mandrel 90. Thus, when a forming cone or mandrel 90 is indexed at a station where rotation is desired, the motion is transferred from the forming cone drive motor 164 to the forming cones or mandrels 90. This rotation of the forming cones or mandrels 90 occurs during the entire dwell period at the bottom pre-heating and softening station 82, and at the first, second, and third heat shrink stations 84, 85, 86.

After the forming cone or mandrel 90 is indexed through the first, second, and third heat shrink stations 84-86, the frusto-conical container side CS and its associated bottom blank BB conform to their desired final shape. The indexing forming turret 80 then shifts each forming cone or mandrel 90 to a bottom-side sealing and ironing station 87 to fully seal the bottom blank BB conform to their desired final shape. The indexing forming turret 80 then shifts each forming cone or mandrel 90 to a bottom-side sealing and ironing station 87 to fully seal the bottom blank BB to the frusto-conical container side CS to form a finished container CA. The bottom-side sealing and ironing station 87 is shown in greater detail in Figure 6.

As can be seen in Figure 6, the bottom-side sealing and ironing station 87 includes a sealing iron 180 having an ironing recess 182 which is conformally configured to the outside of the finished container CA. The sealing iron 180 is attached to a sealing iron mount 184 which is in turn mounted to a tool carriage 186. The tool carriage 186 is supported on first and second tool carriage support shafts 188A, B on suitable bearings 190. The bearings 190 allow the tool carriage 186 and thus the sealing iron 180 to axially slide along a radius of the indexing forming turret 80 upon which the vacuum forming cone or mandrel 90 is located at the bottom-side sealing and ironing station 87. Thus, the sealing iron 180 may be telescoped over the vacuum forming cone or mandrel 90 with its finished container CA mounted thereon. The movement of the sealing iron 180 is synchronized to the movement of the indexing forming turret 80. While the sealing iron 180 of the preferred embodiment is not heated, it is contemplated that the sealing iron may be heated by an electrical heating element (not shown) which could elevate the temperature of the sealing iron 180. However, in the preferred embodiment of the present invention the finished container CA is already softened when received from the third heat shrink station 86 and thus, the finished container's residual heat is sufficient for this sealing operation. Further, an ultrasonic transducer may be used to seal the bottom blank BB to the frusto-conical container side CS. Force is applied to the seam between the bottom blank BB and the frusto-conical container side CS to seal this seam. Also, the sealing iron 180 smooths the side seam SS to make the thickness of the frusto-conical container side CS uniform throughout its circumference. In order to improve the sealing of the seam between the frusto-conical container side CS and the bottom blank BB, a sealing plunger 192 is provided in the base of the ironing recess 182. This sealing plunger 192 is mounted within the sealing iron 180 and is biased by a plunger spring (not shown). The sealing iron 180 is slideably mounted to guides 194A, B and is spring biased by a pair of sealing iron bias springs 196A, B. The sealing iron 180 is advanced towards the indexing forming turret 80 in synchronism with the main indexing mechanism and before the sealing iron 180 contacts the finished container CA, the sealing plunger 192 biased by its associated plunger spring applies a force to the bottom of the finished container CA, thus forming a leak proof seal between the bottom blank BB and the frusto-conical side CS. The sealing iron 180 is further advanced towards the finished container CA and is biased against this container by the sealing iron bias springs 196A, B. The application of pressure to the bottom of the finished container CA by the sealing plunger 192 and the application of pressure to the side seam SS by sealing iron 180 is controlled by varying the bias forces applied by the respective springs by spring adjustment. The application of pressure by the sealing iron 180 and sealing plunger 192 is synchronized with the movement of the tool carriage 186 and thus, with the movement of the indexing forming turret 80 of the present invention.

Figure 6 further illustrates the details of the rotatable vacuum forming cones or mandrels 90. Each of the rotatable vacuum forming cones or mandrels 90 is rotatably mounted on a mandrel support shaft 200. The forming cone or mandrel 90 includes a plurality of vacuum passages including a set of bottom vacuum holes 202, recessed vacuum holes 204, and blank vacuum holes 206. Each of these sets of vacuum holes 202, 204, 206 provided through the surface of the forming cones or mandrels 90 is associated with the respective vacuum supply passage passing through the center of the mandrel support shaft 200. These vacuum passages are interconnected to respective vacuum passages on the rotating air/vacuum manifold ring 208. The rotating air/vacuum manifold ring 208 is fixably mounted on the rotating indexing forming turret 80. A fixed air/vacuum manifold ring 210 is mounted to an indexing forming turret base 212 and thus does not rotate.

Vacuum and compressed air are supplied to the fixed air/vacuum manifold ring 210 through vacuum and compressed air lines (not shown). This vacuum or compressed air is applied to the vacuum holes 202, 204, or 206 in the forming cone or mandrel 90 through the passages already mentioned. The rotating air/vacuum manifold ring 208 interacts with the fixed air/vacuum manifold ring 210 to provide the desired vacuum or compressed air to the bottom vacuum holes 202, recessed vacuum holes 204, or blank vacuum holes 206, as desired.

After the finished container CA is sealed at the bottom/side sealing and ironing station 87, the indexing forming turret 80 indexes to rotate the finished container to the container ejection station 88 where compressed air is applied to the vacuum holes 202 and 204 of the forming cone or mandrel 90 to eject the finished container from the indexing forming turret.

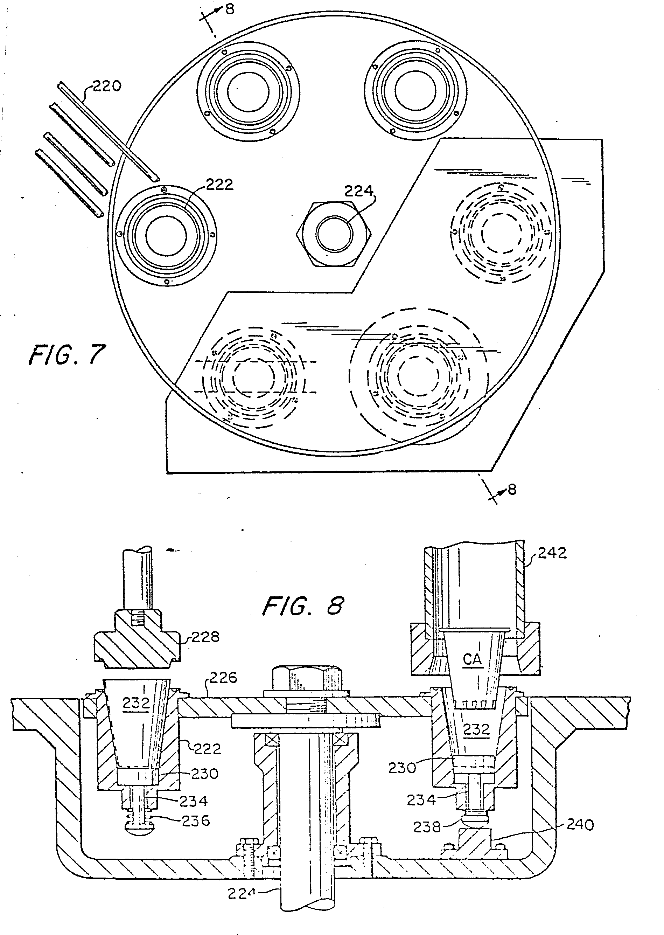

The finished container is then guided by container transfer guides 220 to a top curling station 222 which will be described in connection with Figures 7 and 8.

The curling pots 222 are symmetrically arranged about the indexing shaft 224. These curling pots 222 are mounted on a top curl turret 226 mounted to the indexing shaft 224. A cam driven curling tool 228 is indexed to the indexing shaft 224 and is driven into contact with the curling pot 222 to form a curled lip or bead along the circumference of the top edge of the finished container CA. Each curling pot 222 further includes an ejector plunger 230 provided in the bottom of a container recess 232 of each curling pot 222. The ejector 230 is connected to an ejector plunger shaft 234 located in the retracted position by an ejector plunger spring 236. An ejector button 238 is provided on the end of the ejector plunger shaft 234. An ejector ramp 240 is provided to depress the ejector button 238 and thus to displace the ejector plunger 230 and release the finished container CA from the curling pot 222. The ejector plunger 230, ejector plunger shaft 234, ejector button 238, and ejector ramp 240 are all provided with axial compressed air passages (not shown) which align at the point where the ejector ramp 240 depresses the ejector button 238. This compressed air pushes the finished container CA out of the container recess 232. The finished container is then removed from the container forming machine via a blow off chute 242 which directs the container to a packaging apparatus.

Thus, a two piece container made of heat shrinkable material is formed using relatively simple machinery which can be adapted from paper cup-making machinery already in existence.

Summary of Container Making Operation

As illustrated in Figures 1 and 2, thermoplastic material 10 is cut into arcuate side blanks by the side blanking die 34.

The arcuate side blanks are then transferred to a bottom folding station 83 via a blank transfer turret 70.

Simultaneously, a bottom blank BB is applied to the base of each rotatable vacuum forming cone or mandrel 90 at the bottom blanking station 81. The indexing forming turret 80 is indexed and the bottom is softened while the forming cone or mandrel is pre-heated. The turret is again indexed to present a forming cone or mandrel 90 to the folding station 83.

The blank transfer turret 70 transfers the arcuate blank AB to a position just below the indexed forming cone or mandrel 90 at the folding station 83. As shown in Figure 4, a pair of side blank folding clamps 110, 112 are disposed immediately beneath the arcuate blank AB. These folding clamps 110, 112 are synchronized to the indexing of the indexing forming turret 80. These clamps fold the arcuate blank AB about the forming cone or mandrel 90 as shown in Figure 3. When the arcuate blank is securely held against the forming cone or mandrel 90, the ultrasonic tool or horn 122 is lowered to contact the side seam SS formed by the edges of the arcuate blank. The interaction between the detents 123 of the index plate 121 and the pawl 125 causes the rotation of the forming cone or mandrel 90 to terminate at a position which positions the side seam SS between adjacent notches or recesses 160. The ultrasonic transducer 124 is momentarily energized to fuse the edges of the arcuate blank AB to form the side seam SS. The side blank folding clamps 110, 112 and the ultrasonic tool or horn 122 then retract to allow the indexing forming turret to index the frusto-conical side CS formed from the arcuate blank AB to the next station.

The next three stations about the indexing forming turret 80 are heat shrink stations where the frusto-conical container sides CS is heated to shrink the container side about the end of the forming cone or mandrel 90 and the bottom blank BB disposed thereon. Vacuum is also applied to the recessed vacuum holes 204 to draw the frusto-conical containers side CS into recesses found on the rotatable vacuum forming cone or mandrel 90 to thereby form the finished container shape.

When the vacuum forming cone or mandrel 90 is presented to one of the heating stations, the bottom pre-heating and softening station 82 or the first, second, and third shrink heat stations 84, 85 and 86, the forming cone or mandrel 90 is rotated by a friction drive wheel 176 and its associated drive.

After the shrink process is completed in the first, second and third heat shrink stations 84, 85 and 86, the finished container CA is presented to the bottom side sealing and iron-ing station 87 where a sealing iron 180 having a ironing recess 182 is securely placed over the finished container CA mounted on its respective forming cone or mandrel 90. The sealing iron 180 includes a sealing plunger 192 which is forced against the seam between the bottom blank BB and the frusto-conical container side CS to provide a leak-proof seal of the seam. Shortly thereafter, the closely conforming fit between the sealing iron 180 and the forming cone or mandrel 90 serves to smooth the side seam SS of the frusto-conical container side CS to render the thickness of the container side relatively uniform throughout the circumference. This uniformity of container side wall thickness allows a simplified curling process as well as improved stacking characteristics.

After the bottom-side sealing and ironing process is completed, the container is indexed to a container injection station 88 where the finished container is blown off the forming cone or mandrel 80 and is transferred along container transfer guides 220 and deposited into one of the curling pots 222 of the top curling station as shown in Figures 7 and 8. Here, the upper edge of the frusto-conical container side CS is curled to provide an edge bead or lift. This curling is accomplished by pressing a cam driven curling tool 228 against the curling pot 222. The finished container CA is then ejected and transferred to packaging apparatus.

The present invention may be modified as would occur to one of more ordinary skill in the art without departure from the spirit and scope of this invention.

CLAIMS

1. A method of forming containers from heat shrinkable oriented foam plastic sheet material comprising:

providing bottom blanks to· the bases of a plurality of forming mandrels;

providing and transferring arcuate side blanks formed of said foam plastic sheet material, in turn, to positions adjacent respective ones of said forming mandrels;

folding each arcuate side blank around its adjacent forming mandrel;

ultrasonically fusing a side seam formed by the overlap of the edges of said folded side blanks to form a frusto-conical container sidewall from each arcuate side blank;

shrinking each said sidewall about a respective said forming mandrel and over at least the peripheral portion of said bottom blank; and

sealing the overlapped areas of said sidewall and said bottom portion to provide a closed bottom seam to provide a finished container therefrom.

2. A method of forming containers from heat shrinkable oriented foam plastic sheet material comprising:

cutting arcuate side blanks from said foam plastic sheet material;

providing bottom blanks to the bases of a plurality of forming mandrels;

transferring said arcuate side blanks, in turn, to positions adjacent respective ones of said forming mandrels;

folding each arcuate side blank around said adjacent forming mandrel to overlap the edges thereof in the provision of a side seam;

ultrasonically fusing said side seam formed by the overlap of said edges of said folded side blanks to form a frusto-conical container sidewall from each said arcuate side blank;

shrinking each said sidewall about a respective said forming mandrel and over at least the peripheral portion of said bottom blank; and

sealing the overlapped areas of said sidewall and said bottom portion to provide a closed bottom seam to provide a finished container.

3. The method of claim 1 including the further step of ironing said side seam to render the thickness of said frusto-conical container sidewall substantially uniform throughout its circumference.

4. The method of claim 3 wherein said foam plastic sheet is provided with indicia; said step of cutting including;
   sensing said indicia on said foam plastic sheet; and
   synchronizing the cutting of said arcuate side blanks to the position of said indicia to provide registration therebetween.

5. The method of claim 3 comprising:
   softening each bottom blank prior to transferring an arcuate side blank to its associated forming mandrel.

6. The method of claim 3 comprising retaining each arcuate side blank on its associated mandrel by applying vacuum to the mandrel surface by a plurality of vacuum passages.

7. The method of claim 3 further comprising the steps of:
   ejecting said finished containers from said forming mandrel; and
   forming an annular rim configuration on said container.

8. The method of any of claims 1-7, wherein the finished container has a sidewall of substantially uniform thickness in the axial direction between said annular rim configuration and the bottom of said container.

9. The method of claim 6 further comprising the steps of forming recesses in the frusto-conical container sidewall adjacent to said bottom blank while shrinking said sidewall.

10. The method of claim 4 wherein said indicia comprise printed graphics.

11. The method of claims 3, 4, or 7 wherein said mandrels are arranged on an indexing turret, said turret being indexed to intermittently and sequentially present each mandrel and its associated partially formed containers to desired positions about the periphery of said turret to facilitate performing the steps of said method.

12. A method of forming containers, each having a substantially uniform sidewall thickness, from heat shrinkable stretch oriented foam plastic sheet material comprising:

providing bottom blanks to the bases of a plurality of forming mandrels;

providing and transferring arcuate side blanks formed of said foam plastic sheet material, in turn, to positions adjacent respective ones of said forming mandrels;

folding each arcuate side blank around its adjacent forming mandrel to overlap the edges thereof in the provision of a side seam;

fusing said side seam formed by the overlap of the edges of said folded side blanks to form a frusto-conical container sidewall from each arcuate side blank;

shrinking each said sidewall about a respective said forming mandrel and over at least a peripheral portion of said bottom blank while maintaining substantially uniform the thickness of said sidewall;

sealing the overlapped areas of said blank and said bottom seam to form a finished container; and

ejecting said finished container from said finishing mandrel.

13. A method of forming containers, each having a substantially uniform sidewall thickness, from heat shrinkable oriented foam plastic sheet material comprising:

cutting arcuate side blanks from said foam plastic sheet material;

providing bottom blanks to the bases of a plurality of forming mandrels;

transferring said arcuate side blanks, in turn, to positions adjacent respective ones of said forming mandrels;

folding each arcuate side blank around said adjacent forming mandrel to overlap the edges thereof in the provision of a side seam;

fusing said side seam formed by the overlap of said edges of said folded side blanks to form a frusto-conical container sidewall from each said arcuate side blank;

shrinking each said sidewall about a respective said forming mandrel and over at least a peripheral portion of said

-20-

bottom blank while maintaining substantially uniform the thickness of said sidewall;

sealing the overlapped areas of said blank and said bottom seam to form a finished container; and

ejecting said finished container from said finishing mandrel.

14. The method of claims 12 or 13 wherein said forming mandrels are arranged at equi-spaced distances about the periphery of an indexing turret, said indexing turret intermittently and sequentially presenting said forming mandrels to a plurality of work stations where the steps of the method of forming are performed.

15. The method of claim 14 wherein said forming mandrels each include equally spaced scalloped indentations formed in said mandrel;

said step of shrinking including applying vacuum to said scalloped indentations to conform said frusto-conical sidewall to the contour of said indentations.

16. The method of claim 14 wherein said step of fusing is accomplished by applying ultrasonic energy.

17. The method of claim 16 wherein said step of heating is performed using radiant energy.

18. The method of claims 12 or 13 wherein said foam plastic sheet material is bi-axially stretch oriented.

19. A container formed of shrinkable stretch oriented thermoplastic sheet material comprising:

a bottom;

a frusto-conical sidewall; and

an annular rim;

said frusto-conical sidewall having a substantially uniform thickness between said bottom and said annular rim.

20. A container formed of shrinkable bi-axially oriented thermoplastic sheet material comprising:

a bottom;

a frusto-conical sidewall; and

an annular rim;

said frusto-conical sidewall having a substantially uniform thickness between said bottom and said annular rim.

21.  The container of claims 19 or 20 wherein said frusto-conical sidewall is formed from an arcuate blank of said sheet material;

the orientation of said arcuate blank being predominantly in a direction tangential to the median of the arcs defining the edges of said arcuate blank.

22.  The container of claim 21 further comprising scalloped indentations formed in the sidewall near the bottom.

23.  The container of claim 22 wherein said annular rim has a curled surface with an annular cross-section.

24.  The container of claim 23 wherein said container is formed from an arcuate blank of shrinkable bi-axially oriented thermoplastic.

25.  Means forming containers having a substantially uniform sidewall thickness from arcuate sidewall blanks of shrinkable thermoplastic sheet material and disc-shaped bottom blanks comprising:

a plurality of frusto-conical forming mandrels (90) each having a tapered sidewall portion and a bottom portion, said mandrels being equiangularly arranged about the periphery of a forming turret (80), said forming turret sequentially presenting said mandrels to a plurality of work stations;

blank supply means for providing disc-shaped bottom blanks and for applying a bottom blank to the bottom of each forming mandrel;

transfer means (70) for providing and transferring arcuate blanks to a position adjacent said forming mandrels of said forming turret;

folding means (110-120) for wrapping an arcuate blank around each of said forming mandrels, said arcuate blank overlapping at a point on the forming mandrel to form a side seam;

means (122-130) for fusing the side seam to form a frusto-conical container sidewall;

heating means (140-154) for heating each said frusto-conical sidewall to a temperature sufficient to shrink said sidewall over the periphery of said associated bottom blank while maintaining substantially uniform the thickness of said sidewall to form a finished container; and

discharge means (220) ejecting each said container from said mandrel downstream of said heating means.

26. Means forming containers having a substantially uniform sidewall thickness from arcuate sidewall blanks of shrinkable thermoplastic sheet material and disc shaped bottom blanks comprising:

arcuate blank forming means (34) for producing arcuate blanks from thermoplastic sheet material;

a plurality of frusto-conical forming mandrels (90) each having a tapered sidewall portion and a bottom portion, said mandrels being equiangularly arranged about the periphery of a forming turret (80), said forming turret sequentially presenting said mandrels to a plurality of work stations;

blank supply means for providing disc-shaped bottom blanks and for applying a bottom blank to the bottom of each forming mandrel;

transfer means (70) for transferring said arcuate blanks from said blank means to a position adjacent said forming mandrels of said forming turret;

folding means (110-120) for wrapping an arcuate blank around each of said forming mandrels, said arcuate blank overlapping at a point on the forming mandrel to form a side seam;

means (122-130) for fusing said side seam to form a frusto-conical container sidewall;

heating means (140-154) for heating each said frusto-conical sidewalls to a temperature sufficient to shrink said sidewall over the periphery of said associated bottom blank while maintaining substantially uniform the thickness of said sidewall to form a finished container; and

discharge means (220) ejecting each said container from said mandrel downstream of said heating means.

27. The device of claims 25 or 26 further comprising:

sealing means (180-194) for ironing the overlapped areas of said sidewall and said bottom blank to provide a closed bottom seal.

0073416

28. The device of claim 27 further comprising:
ironing means for ironing the side seam to render the thickness of said frusto-conical container sidewall substantially uniform throughout its circumference.

29. The device of claim 28 further comprising:
vacuum means for retaining said frusto-conical sidewalls and said bottom blanks on said forming mandrels (90).

30. The device of claim 29 wherein said frusto-conical forming mandrels (90) each include equally spaced scalloped indentations (160) form on the bottom portion of said frusto-conical sidewall means.
said vacuum means applying vacuum to said indentations to form conforming indentations in said frusto-conical container sidewall when heat is applied by said heating means to soften and shrink said frusto-conical container sidewall.

31. The device of claim 30 wherein said means for fusing comprises an ultrasonic transducer (124).

32. The device of claim 31 further comprising:
bottom blank presoftening means (100-104) for heating and thereby softening said bottom blanks.

33. The device of claim 32 wherein said forming turret (80) is intermittently indexed to present said forming mandrels (90) to the plurality of work stations (81-88).

34. The device of claim 33 wherein said thermoplastic sheet material is biaxially oriented.

35. The device of claims 25 or 26 wherein said shrinkable thermoplastic sheet material has indicia printed thereon;
said arcuate blank forming means (34) comprising:
said blanking punch (36) and conforming die means (38);
means (22,24) for feeding said thermoplastic sheet material to said punch and die;
print registration sensor means (32) for sensing said printed indicia;
punch drive means for actuating said punch and conforming die means to produce said arcuate blanks; and

means for synchronizing said punch drive means to the presence of sensed printed indicia.

36. The device of claim 35 wherein said printed indicia comprise printed graphics.

37. The device of claim 36 wherein said arcuate blank forming means (34) further comprises vacuum scrap removal means (64) for removing the scrap remaining after each arcuate sidewall blank is formed.

38. The device of claim 30 wherein said folding means comprises:

at least one blank folding clamp (110, 112) hinged at a position adjacent to the position of a forming mandrel (90) located at said folding means, said blank folding clamp being configured to conform to the circumferential contour of said forming mandrel upon closing;

blank folding clamp drive means (114-120) for driving said at least one blank folding clamp between an open position and a closed position in which said clamp conforms to said mandrel; and

means for synchronizing the closing of said clamp by said blank folding clamp drive means with the presentation of an arcuate sidewall blank by said transfer means and with the indexing of said forming turret (70).

39. The device of claim 38 further comprising forming mandrel rotation means (162) for rotating each forming mandrel (90);

said folding means further including rotation stopping means for terminating the rotation of said forming mandrel by said forming mandrel rotation means in response to said means for synchronizing.

40. The device of claim 39 wherein said rotation stopping means stops the rotation of the mandrel (90) in a position which prevents a side seam from being located over one of said scalloped indentations (160).

41. The device of claim 40 wherein said heating means comprises radiant heaters.

42. The device of claims 25 or 26 further comprising:

top curl forming means/forming (222) an annular rim configuration on a top rim portion of each of said containers to define mouths of said containers;

said discharge means/presenting (220) said containers to said top curl forming means.

43. The device of claim 42 further comprising:

means for removing said containers from said top curl forming means/to (222) a remote location for stacking.

44. Means forming containers having a substantially uniform sidewall thickness from arcuate sidewall blanks of shrinkable stretch oriented thermoplastic sheet material and disc-shaped bottom blanks comprising:

arcuate blank forming means/for (34) producing arcuate blanks from said stretch oriented thermoplastic sheet material;

a plurality of frusto-conical forming mandrels/, (90) each having a tapered sidewall portion and a bottom portion, said mandrels being symmetrically arranged about the periphery of a forming turret/, (80) said forming turret sequentially presenting said mandrels to a plurality of work stations (81-88);

blank means/for (92) providing disc-shaped bottom blanks and for applying a bottom blank to the bottom of each forming mandrel;

transfer means/for (70) transferring said arcuate blanks from said blank forming means to positions adjacent respective ones of said forming mandrels of said forming turret;

folding means/for (110-120) wrapping arcuate blanks around said respective ones of said forming mandrels, each said arcuate blank overlapping at a point on the forming mandrel to form a side seam;

ultrasonic fusion means/for (122-130) fusing the side seam of each said blank to form a frusto-conical container sidewall;

heating means/for (140-194) heating said frusto-conical sidewalls to a temperature sufficient to shrink said sidewalls over the periphery of their associated bottom blanks while maintaining substantially uniform the thickness of said sidewall; and

discharge means/ejecting (220) said containers from said mandrels downstream of said heating means.

45. The device of claim 44 further comprising:

sealing means (180-194) for ironing the overlapped areas of said sidewall and said bottom blank to provide a closed bottom seal.

46. The device of claim 45 further comprising:

ironing means for ironing the side seam to render the thickness of said frusto-conical container sidewall substantially uniform throughout the circumference.

47. The device of claim 46 further comprising:

vacuum means for retaining said frusto-conical sidewalls and said bottom blanks on said forming mandrels (90).

48. The device of claim 47 wherein said frusto-conical forming mandrels (90) each include equally spaced scalloped indentations (160) forms on said frusto-conical sidewall near said bottom portion;

said vacuum means applying vacuum to said indentations to form conforming indentations in said frusto-conical container sidewall when heat is applied by said heating means to soften and shrink said frusto-conical container sidewall.

49. The device of claim 48 further comprising:

bottom blank presoftening means (100-104) for heating and thereby softening said bottom blanks.

50. The device of claim 44 wherein said shrinkable thermoplastic sheet material has indicia printed thereon;

said arcuate blank forming means (34) comprising;

side blanking punch (36) and conforming die means (38);

means (22,24) for feeding said thermoplastic sheet material to said punch and die;

print registration sensor means (32) for sensing said printed indicia;

punch drive means for actuating said punch into contact with said conforming die means to produce said arcuate blanks; and

means for synchronizing said punch drive means to the presence of the sensed printed indicia.

51. The device of claim 50 wherein said printed indicia comprise printed graphics.

52.    The device of claim 51 wherein said arcuate blank
forming means (34) further comprises vacuum scrap removal means (64) for
removing the scrap remaining after each arcuate sidewall blank
is formed.

53.    The device of claim 48 wherein said folding means
comprises:
    at least one blank folding clamp (110,112) hinged at a position ad-
jacent to the position of a forming mandrel (90) located at said
folding means, said blank folding clamp being configured to
conform to the circumferential contour of said forming mandrel
upon closing;
    blank folding clamp drive means (114-120) for driving said at least
one blank folding clamp between an open position and a closed
position wherein said clamp conforms to said mandrel; and
    means for synchronizing the closing of said clamp by said
blank folding clamp drive means with the presentation of an
arcuate sidewall blank by said transfer means and with the indexing of said forming turret  (70).

54.    The device of claim 53 further comprising forming
mandrel rotation means (162) for rotating each forming mandrel;
    said folding means further including rotation stopping
means for terminating the rotation of said forming mandrel by
said forming mandrel rotation means in response to said means
for synchronizing.

55.    The device of claim 59 wherein said rotation stopping
means stops the mandrel to prevent a side seam from being
located over one of said scalloped indentations (160).

56.    The device of claim 46 wherein said heating means
comprises radiant heaters.

57.    The device of claim 46 further comprising:
    top curl forming means (222) forming an annular rim configuration
on a top rim portion of each of said containers to define
mouths of said containers;
    said discharge means (220) presenting said containers to said top and forming means.

58. Means forming containers having a substantially uniform sidewall thickness from arcuate sidewall blanks of shrinkable stretch oriented thermoplastic sheet material and disc-shaped bottom blanks comprising:

arcuate blank forming means (34) for producing arcuate blanks from said stretch oriented thermoplastic sheet material;

a plurality of frusto-conical forming mandrels (90) each having a tapered sidewall portion and a bottom portion, said mandrels being symmetrically arranged about the periphery of a forming turret (80), said forming turret being intermittently indexed to sequentially present said mandrels to a plurality of work stations (81-88);

blank means (92) for providing disc-shaped bottom blanks and for applying a bottom blank to the bottom of each forming mandrel;

bottom blank presoftening means (100-104) for heating and thereby softening said bottom blanks;

transfer means (70) for transferring said arcuate blanks from said blank forming means to positions adjacent respective ones of said forming mandrels of said forming turret;

folding means (110-120) for wrapping an arcuate blank around each of said forming mandrels, said arcuate blank overlapping at a point on the forming mandrel to form a side seam;

ultrasonic fusion means (122-130) for fusing the side seams to form frusto-conical container sidewalls;

vacuum means for retaining said frusto-conical sidewalls and said bottom blanks on said forming mandrels;

heating means (140-194) for heating said frusto-conical sidewalls to a temperature sufficient to shrink said sidewalls over the periphery of their associated bottom blanks while maintaining substantially uniform the thickness of said sidewall;

sealing means (180-194) for ironing the overlapped areas of said sidewall and said bottom blank to provide a closed bottom seal to form a finished container; and

discharge means (220) ejecting said container from said mandrel downstream of said sealing means.

59. Means forming containers having a substantially uniform sidewall thickness from arcuate sidewall blanks of shrinkable bi-axially oriented thermoplastic sheet material and disc-shaped bottom blanks comprising:

a plurality of frusto-conical forming mandrels (90), each having a tapered sidewall portion and a bottom portion, said mandrels being symmetrically arranged about the periphery of a forming turret (80), said forming turret sequentially presenting said mandrels to a plurality of work stations (81-88);

blank means (92) for providing disc-shaped bottom blanks and for applying a bottom blank to the bottom of each forming mandrel;

transfer means (70) for providing and transferring arcuate blanks formed of said thermoplastic sheet material from said blank forming means to positions adjacent respective ones of said forming mandrels of said forming turret;

folding means (110-120) for wrapping an arcuate blank around each of said forming mandrels, each said arcuate blank overlapping at a point on the forming mandrel to form a side seam;

ultrasonic fusion means (122-130) for fusing the side seams to form frusto-conical container sidewalls;

heating means (140-194) for heating said frusto-conical sidewalls to a temperature sufficient to shrink said sidewalls over the periphery of their associated bottom blanks while maintaining substantially uniform the thickness of said sidewall; and

discharge means (220) ejecting said container from said mandrel downstream of said heating means.

60. Means forming containers having a substantially uniform sidewall thickness from arcuate sidewall blanks of shrinkable bi-axially oriented thermoplastic sheet material and disc-shaped bottom blanks comprising:

a plurality of frusto-conical forming mandrels (90) each having a tapered sidewall portion and a bottom portion, said mandrels being symmetrically arranged about the periphery of a forming turret (80), said forming turret being intermittently indexed to sequentially present said mandrels to a plurality of work stations;

blank means (92) for providing disc-shaped bottom blanks and for applying a bottom blank to the bottom of each forming mandrel;

bottom blank presoftening means (100-104) for heating and thereby softening said bottom blank;

transfer means (70) for providing and transferring said arcuate blanks formed of said thermoplastic sheet material from said blank forming means to positions adjacent respective ones of said forming mandrels of said forming turret;

folding means (110-120) for wrapping an arcuate blank around each of said forming mandrels, said arcuate blank overlapping at a point on the forming mandrel to form a side seam;

ultrasonic fusion means (122-194) for fusing the side seams to form frusto-conical container sidewalls;

vacuum means for retaining said frusto-conical sidewalls and said bottom blanks on said forming mandrels;

heating means (140-194) for heating said frusto-conical sidewalls to a temperature sufficient to shrink said sidewalls over the periphery of their associated bottom blanks while maintaining substantially uniform the thickness of said sidewall;

sealing means (180-194) for ironing the overlapped areas of said sidewall and said bottom blank to provide a closed bottom seal to form a finished container; and

discharge means (220) ejecting said container from said mandrel downstream of said sealing means.

61. A method of forming containers from arcuate blanks of thermoplastic material stretch oriented along a diagonal thereof and bottom blanks comprising:

forming a frusto-conical container sidewall and said bottom blanks by applying heat thereto, thereby shrinking said sidewall over at least the peripheral portion of said bottom blank to form a finished container.

62. The method of claim 61 wherein the step of shrinking is performed while maintaining substantially uniform the thickness of said sidewall.

63. A method of forming containers from arcuate blanks of thermoplastic stretch oriented along a diagonal thereof comprising:

forming a frusto-conical container sidewall from each of said arcuate blanks by seaming opposing edges thereof; and

forming a finished container from at least said frusto-conical container sidewall while maintaining substantially uniform the thickness of said sidewall by shrinking said sidewall over a mandrel.

64. Means forming containers from arcuate blanks of thermoplastic material stretch oriented along a diagonal thereof and bottom blanks comprising:

means for forming frusto-conical container sidewalls from each of said arcuate blanks and seaming opposing edges of said blanks; and

means for assembling each said frusto-conical container sidewall and associated said bottom blank including means for shrinking each said sidewall over at least the peripheral portion of said associated bottom blank by the application of heat thereto to form a finished container.

65. The apparatus of claim 64 wherein said means for assembling maintains substantially uniform the thickness of said sidewall.

66. Means forming containers from arcuate blanks of thermoplastic stretch oriented along a diagonal thereof comprising:

first means for forming a frusto-conical container sidewall from each of said arcuate blanks by seaming opposing edges thereof; and

second means for forming a finished container from at least said frusto-conical container sidewall while maintaining substantially uniform the thickness of said sidewall.

67. The apparatus of claim 66 wherein said second means includes means for shrinking said sidewall over a mandrel to form said finished container.

FIG. 1

FIG. 1A

152  146
150  85
154
144  140  142
148

FIG. 1B

124
122
70
110

100
BB  90
102  160

121  80
178
121  150
90  CS  152
154

164
174
176
170  170  173
162  168  168  168  172

166

FIG. 5

2/7

0073416

# FIG. 2

FROM ROLL

3/7

0073416

FIG. 3

124
126
128 130 132
146
150
152 SS 90
144 CS 122 110 83 112 90 98
85 84 82 81 BB
154 92
148
140 114 116
142 118 120 177
96

4/7

0073416

FIG. 4

FIG. 6

7 / 7

FIG. 7

FIG. 8